# EUROPÄISCHE PATENTSCHRIFT

(11) **EP 2 003 415 B1**
(45) Veröffentlichungstag und Bekanntmachung des Hinweises auf die Patenterteilung: **20.09.2017**
(21) Anmeldenummer: 08400031.4
(22) Anmeldetag: 23.05.2008
(51) Int. Cl.: F28D 20/00

(54) **Be- und/oder Entladesystem und Verfahren zum Be- und/oder Entladen eines thermischen Energiespeichers mit einem Einsatz in einem Innenbereich eines Diffusors**
Charging and/or discharging system and method for charging and/or discharging a thermal energy storage with an insert provided inside a diffuser
Système de charge et/ou de décharge et procédé de chargement et/ou de déchargement d'un accumulateur d'énergie thermique doté d'un insert dans une zone intérieure d'un diffuseur

(30) Priorität: 12.06.2007 DE 102007027571
(43) Veröffentlichungstag der Anmeldung: 17.12.2008
(73) Patentinhaber: eins energie in sachsen GmbH & Co. KG, 09111 Chemnitz (DE); Technische Universität Chemnitz, 09111 Chemnitz (DE)
(72) Erfinder: Urbaneck, Dr.-Ing., Thorsten, 09125 Chemnitz (DE); Uhlig, Ulf, 09236 Claussnitz (DE); Barthel, Uwe, 09127 Chemnitz (DE)
(74) Vertreter: Steiniger, Carmen

(56) Entgegenhaltungen:
- EP-A1- 1 076 219
- EP-A1- 1 489 374
- EP-A2- 0 928 940
- DE-A1- 3 819 317
- DE-U1- 9 001 675
- JP-A- S5 872 838
- JP-A- 2002 022 382
- JP-A- 2002 243 375

## Beschreibung

Die vorliegende Erfindung betrifft ein Be- und/oder Entladesystem sowie ein Verfahren zum Be- und/oder Entladen eines thermischen Energiespeichers mit einem Flüssigkeitsbehälter mit wenigstens einem Flüssigkeitszulauf und wenigstens einem Flüssigkeitsablauf, wobei der Flüssigkeitszulauf und/oder der Flüssigkeitsablauf wenigstens eine Flüssigkeitsleitung, wie zum Beispiel eine Haupt- oder Verteilleitung, aufweist, die in einen radialen Diffusor mündet, durch welchen Flüssigkeit in den oder aus dem Flüssigkeitsbehälter geleitet wird, und wobei der Diffusor einen zentral angeordneten und mit der Flüssigkeitsleitung verbundenen Diffusoranschlussbereich und sich radial von dem Diffusoranschlussbereich erstreckende, voneinander beabstandete Diffusorplatten aufweist.

In der Energiespeichertechnik gibt es verschiedene Prinzipien und Konstruktionen, um einen thermischen Speicher zu be- bzw. entladen. Man versucht dabei, mit speziellen Ladesystemen in dem thermischen Energiespeicher eine thermische Schichtung zu erreichen, so dass beispielsweise Flüssigkeit mit niedriger Temperatur im unteren Bereich des thermischen Energiespeichers vorhanden ist und sich Flüssigkeit mit hoher Temperatur im oberen Bereich des Energiespeichers befindet. Auch wenn hierbei in der Praxis keine ideale Schichtung von Flüssigkeit erreichbar ist, spricht man bei solchen Ladesystemen von Schichtenladevorrichtungen. Dabei sind Konstruktionen mit einer inneren Beladung als auch mit einer äußeren Beladung von thermischen Energiespeichern bekannt. Auch können physikalische Grundprinzipien genutzt werden, um Flüssigkeiten in Abhängigkeit von der Temperatur in einem thermischen Energiespeicher einzuschichten. Zudem kann die Anlagentechnik so ausgebildet werden, dass eine schichtweise Ladung bzw. Entladung eines thermischen Energiespeichers ermöglicht wird.

Um thermische Energie effizient und kostengünstig speichern zu können, arbeitet man daran, einfache Be- und Entladesysteme zur Verfügung zu stellen, die dennoch zuverlässig eine thermische Schichtung im Speicher bewirken und erhalten können. So sind verschiedenartige Schichtenladevorrichtungen bekannt, in welchen versucht wird, Schichtungen in thermischen Energiespeichern auf verschiedene Art und Weise zu realisieren. Solche Schichtenladevorrichtungen können sowohl fixe als auch variable Be- und Entladesysteme sein.

Aus der Druckschrift EP 0 928 940 A2 ist ein Warmwasserbereiter mit einer am Boden eines Wasserspeicherbehälters vorgesehenen Strömungsleiteinrichtung bekannt. Die Strömungsleiteinrichtung weist eine Deckplatte und eine Bodenplatte auf, zwischen welchen ein Labyrinth aus internen Leitplatten ausgebildet ist. In die Deckplatte führt ein Wassereinlassrohr, dessen Ende zum Halten Wassereinlassrohres über einen in der Strömungsleiteinrichtung befindlichen, senkrecht ausgerichteten Rohrgreifer mit kreuzförmigem Querschnitt geschoben ist.

Be- und Entladesysteme mit fixer Beladehöhe, wie zum Beispiel in bestimmten Höhen vorgesehene radiale Diffusoren, eignen sich insbesondere für den Einsatz bei näherungsweise konstanten Vor- und Rücklauftemperaturen. Das ist beispielsweise bei Kältespeichern der Fall. Bei diesen Konstruktionen wird die Eintrittsgeschwindigkeit des Fluids in den Speicher durch einen möglichst großen Gesamtquerschnitt der Austrittsöffnungen stark verringert und somit die Vermischung mit dem in dem Speicher befindlichen Fluid minimiert. Eine Einschichtung von Fluid mit variabler Temperatur in die jeweilige Schicht ist bei derartigen Systemen beispielsweise durch in der Höhe veränderbare bzw. schwimmende Tassen möglich. Andernfalls steigt oder sinkt das Fluid nach dem Eintritt in den Speicher entsprechend seiner Temperatur auf bzw. ab und es kommt entlang des Strömungsweges zu einer Vermischung mit dem Speicherfluid. Diese Systeme sind prinzipiell für Speicher ab einem Volumen von ca. 50 m³ geeignet.

Bedingt durch die vielfältigen Einflussgrößen auf die Strömungsvorgänge in sogenannten Schichtenladevorrichtungen bzw. in thermischen Speichern weisen die bekannten Be- bzw. Entladesysteme für thermische Speicher mehr oder weniger gute Schichtungscharakteristiken für das einströmende Fluid auf. Von großem Einfluss ist dabei die Intensität der Mischvorgänge im Beladesystem, an den Auslässen sowie dem umliegenden Gebiet als auch im Speicher.

Be- und Entladeeinrichtungen sollen in vielen Fällen den Fluidimpuls und den Fluiddrehimpuls abbauen, Turbulenzen vermeiden bzw. die Turbulenzgeneration unterdrücken sowie konvektive und turbulente Mischeffekte im Speicher minimieren.

Werden bei Be- und Entladesystemen für thermische Speicher mehrere Diffusoren eingesetzt, muss in der Regel der gesamte ein- oder auszuleitende Volumenstrom auf eine Vielzahl von Teilstrecken, die durch Verteilleitungen entstehen, gleichmäßig verteilt werden. Die Einströmung von den jeweiligen Rohrleitungen in die Diffusoren und umgekehrt wird durch den jeweiligen Aufbau der Strömungskanäle, welche sich in Rohrleitungen, Verzweigungen und den Diffusoren selbst ausbilden, wesentlich beeinflusst. Dies zeigt sich insbesondere in nicht idealen Ausströmungen, welche z. B. durch Rezirkulation und Injektion am Auslass bewirkt werden. Damit ist beispielsweise bei den im Stand der Technik bekannten Kältespeichern eine ideale Be- und Entladung nicht möglich, was im Extremfall zum Versagen der angestrebten Speicherbetriebsweise führen kann.

Es ist daher die Aufgabe der vorliegenden Erfindung, ein Be- und/oder Entladesystem für einen thermischen Energiespeicher zur Verfügung zu stellen, mit welchem Flüssigkeit möglichst gleichmäßig in den bzw. aus dem Flüssigkeitsbehälter geleitet werden kann, so dass eine gute geschichtete Be- und Entladung eines thermischen Energiespeichers gewährleistet werden kann.

Durch die Verwendung des erfindungsgemäßen Einsatzes mit einem definierten Strömungswiderstand, der wesentlich höher als der Strömungswiderstand der Flüssigkeitsleitung ist, die in den radialen Diffusor mündet, kann eine definierte Verteilung in dem zentralen Bereich des als Be- bzw. Entladetasse genutzten Diffusors erzeugt werden. Somit kann beispielsweise ausgehend von dem im Innenbereich des Diffusors vorgesehenen Einsatz, wenn dem Diffusor gegenüber eine Wand vorgesehen ist, ein Prallstrahl erzeugt werden, in dessen Folge eine genau definierte Strömungssituation in Richtung des Diffusorsauslasses generiert werden kann. Die Erzeugung einer definierten Strömung ist auch in umgekehrter Richtung mit Hilfe der Erfindung im Ansaugbetrieb des Diffusors möglich. Es können somit mit dem Diffusor definierte Strömungen in beiden Richtungen erzeugt werden. So kann bei Vorhandensein mehrerer, vom Diffusor ausgehender oder in den Diffusor mündender Flüssigkeitsleitungen mit dem Diffusor die Flüssigkeitsverteilung gezielt beeinflusst werden. Dies hat den Vorteil, dass mit Hilfe der Erfindung relativ große Mengen an Flüssigkeit in relativ kleinen Zeiten definiert in einen thermischen Energiespeicher geladen und aus diesem entladen werden können, wobei eine gute thermische Schichtung innerhalb des thermischen Energiespeichers eingestellt und aufrechterhalten werden kann.

Der Einsatz bzw. das oder die Einbauteil(e), welche in dem Diffusoreinlass eingesetzt werden, können dabei so ausgebildet sein, dass der Strömungswiderstand bzw. die Strömungsgeschwindigkeit nur wenig von der Strömungsrichtung abhängt, so dass eine Richtungsumkehr der Strömung beim Be- und Entladen ohne weiteres möglich ist. Darüber hinaus sollte der Formwiderstandswert (ξ-Wert)- so weit wie möglich unabhängig von der Reynoldszahl (Re-Zahl) sein. Es ist zudem von Vorteil, wenn der Flüssigkeitsstrahl in allen Betriebssituationen weitgehend stabil zur Achse des Diffusoreinlasses verläuft. So sollte vorzugsweise keine Strahlrotation durch den Einsatz bewirkt werden. Daher wird eine definierte Störeinwirkung in den Formwiderstand eingearbeitet, die einer möglichen Rotation entgegenwirkt.

Gemäß einem bevorzugten Ausführungsbeispiel der vorliegenden Erfindung weist der Diffusor einen zylinderförmigen Flansch auf, mit dem der Diffusor mit der Verteilleitung verbunden ist, wobei der Einsatz in dem Flansch angeordnet ist. Somit lässt sich bereits in dem Eingangsbereich des Diffusors eine genau definierte Strömung erzeugen.

Entsprechend der Erfindung weist der Einsatz ein Formstück bzw. einen Formwiderstand auf. Das Formstück ändert bei Durchströmung des Diffusors die Druckdifferenz im Innenbereich des Diffusors, so dass eine weitgehend definierte Strömung im zentralen Bereich der Be- bzw. Entladetasse erzeugt werden kann, die bei einem Flüssigkeitszulauf aus dem Innenbereich des Diffusors in den Bereich zwischen den Diffusorplatten austritt bzw. bei einem Flüssigkeitsablauf von dem Diffusor in die Verteilleitung geleitet wird. Das Formstück ist eine bidirektionale Borda-Mündung. Die erfindungsgemäß vorgesehene Borda-Mündung ist ein Einsatz in Form eines zylindrischen Rohrstutzens, welcher in beiden Richtungen, das heißt bidirektional, von Flüssigkeit durchströmbar ist. Durch die Borda-Mündung kann eine starke Strömung definiert in der Mitte des Diffusorein- und des Diffusorauslasses bzw. der Be- und/oder Entladetasse erzeugt werden, so dass die Borda-Mündung nicht nur zu einer Änderung des Strömungswiderstandes führt sondern auch als Strömungsleiteinrichtung wirkt.

In einer zweckmäßigen Ausgestaltung der vorliegenden Erfindung weist die Borda-Mündung am Auslass und/oder Einlass eine schräge, scharfkantige Fase auf. Die am Aus- bzw. Einlass vorgesehene modifizierte Geometrie der Borda-Mündung bewirkt, dass der aus der Borda-Mündung austretende Flüssigkeitsstrahl definiert und rotationsfrei in Richtung des Austritts gelenkt werden kann. Ebenso kann durch die Borda-Mündung die Strömungssituation am Eintritt der Flüssigkeit in die Borda-Mündung bzw. in den Diffusor, in den die Borda-Mündung eingebaut ist, beeinflusst werden.

Der thermische Energiespeicher, in dem das erfindungsgemäße Be- und/oder Entladesystem verwendet wird, wird in Systemen zur Wärme- und Kälteversorgung eingesetzt und kann sowohl ein Wärme- als auch ein Kältespeicher sein. Bei solchen Wärme- und Kältespeichern dient in vielen Fällen Flüssigkeit, wie Wasser, zum Teil in Kombination mit anderen Materialien, als Speicher- bzw. Wärmeträgermedium, da es durch seine gute Speicherfähigkeit und relativ niedrige Viskosität akzeptable Anforderungen an die Technik stellt. Als Wärmespeicher werden typischerweise solche thermischen Energiespeicher bezeichnet, die warmes Wasser, beispielsweise für Heizzwecke, speichern, während Kältespeicher solche thermischen Energiespeicher sind, die kaltes Wasser, beispielsweise zur Gebäudekühlung, speichern.

Die durch das erfindungsgemäße Be- und/oder Entladesystem bewirkbare definierte Ein- bzw. Ausschichtung von Flüssigkeit in einem thermischen Energiespeicher eignet sich gerade für Kältespeicher mit Volumen > 2.500 m³ und Durchmesser/Höhe von ca. 1:1 besonders gut, da die Effizienz solcher Speicher besonders davon abhängt, dass ungewollte Vermischungen von Flüssigkeiten mit voneinander abweichender Temperatur weitgehend vermieden werden, und der Aufbau einer guten thermischen Schichtung gerade bei Kältespeichern wesentlich davon abhängig ist, wie gut die kalte bzw. warme Flüssigkeit bzw. das kalte oder warme Wasser zu Beginn der Beladung unten in den Speicher eingeschichtet wird.

In einer vorteilhaften Weiterbildung der Erfindung sind an und/oder in dem Einsatz Störstellen vorgesehen. Solche Störstellen können beispielsweise Kerben im Einsatz oder kleine Störstellen, wie Mini-Fahnen, im Innenbereich, wie der Innenwand, oder am Rand des Diffusors sein. Durch derartige Störstellen kann die Strömung stabilisiert werden. Die Störstellen besitzen demnach eine positive Störwirkung, die zu einer Strahlstabilsierung führt. Insbesondere kann durch solche Störstellen eine Strahlrotation verhindert werden. Die Aufgabe der Erfindung wird ferner durch ein Verfahren zum Be- und/oder Entladen eines thermischen Energiespeichers gelöst, wobei über wenigstens eine Flüssigkeitsleitung, die in einen radialen Diffusor mündet, Flüssigkeit in einen bzw. aus einem Flüssigkeitsbehälter des thermischen Energiespeichers geleitet wird, und wobei der Strömung der Flüssigkeit ein Strömungswiderstand durch wenigstens einen Einsatz in einem zentralen Bereich des Diffusors entgegengesetzt wird, und wobei der Strömungswiderstand in dem zentralen Bereich des Diffusors höher als der Strömungswiderstand der Flüssigkeitsleitung ist, wobei der Einsatz ein Formstück aufweist und das Formstück eine bidirektionale Borda-Mündung umfasst. Mit dem erfindungsgemäßen Verfahren kommt es zu einer guten bzw. gewünschten Verteilung der Volumenströme in den jeweiligen Teilstrecken bzw. Flüssigkeitsleitungen des thermischen Energiespeichers und innerhalb des radialen Diffusors. Entsprechend kann Flüssigkeit in den bzw. aus dem thermischen Energiespeicher definiert ein- bzw. ausgeschichtet werden.

Vorteilhafte Ausführungsformen der vorliegenden Erfindung werden im Folgenden anhand der Figuren der Zeichnung näher erläutert, wobei
- Figur 1, 2, 3 und 4: schematisch mögliche Ausführungsvarianten von Be- und/oder Entladesystemen in thermischen Energiespeichern zeigen;
- Figur 5: eine schematische Darstellung von Verteilleitungen und Diffusoren in einer Draufsicht auf einen thermischen Energiespeicher zeigt;
- Figur 6: schematisch einen radialen Diffusor eines erfindungsgemäßen Beund/oder Entladesystems für einen thermischen Energiespeicher mit einem im zentralen Bereich des Diffusors angeordneten Einsatz in Form einer bidirektionalen Borda-Mündung zeigt, und
- Figur 7: schematisch einen Querschnitt eines erfindungsgemäßen Diffusoreinsatzes mit beispielhaften Störstellen zeigt.

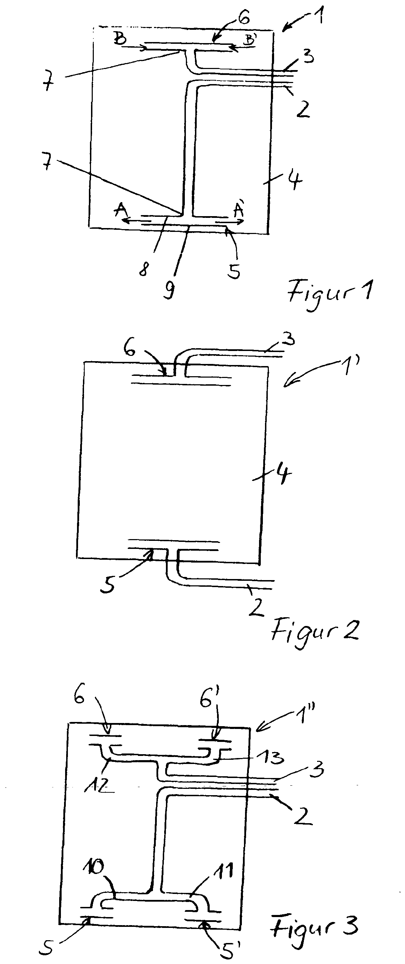

Die Figuren 1 bis 4 veranschaulichen schematisch mögliche Varianten von Be- und/oder Entladeeinrichtungen für thermische Energiespeicher 1, 1' 1 ", 1"'. Neben den gezeigten Konstruktionen ist eine Vielzahl weiterer Varianten zur Be- und Entladung von thermischen Speichern möglich.

Gemäß der in Figur 1 dargestellten Variante führen Haupt- bzw. Rohrleitungen 2, 3 in das Innere eines Flüssigkeitsbehälters 4 des thermischen Energiespeichers 1. Die Rohrleitung 2 ist ein Flüssigkeitszulauf, die Rohrleitung 3 ist ein Flüssigkeitsablauf. Der Flüssigkeitszulauf 2 mündet in eine unten in dem Flüssigkeitsbehälter 4 vorgesehene Beladetasse 5. Der Flüssigkeitsablauf 3 mündet in eine oben in dem Flüssigkeitsbehälter 4 vorgesehene Entladetasse 6.

Die Be- und Entladetassen 5, 6 sind jeweils in Form radialer Diffusoren ausgebildet. Sie weisen jeweils einen zentral angeordneten und mit der Verteilleitung bzw. Rohrleitung 2, 3 verbundenen Diffusoranschlussbereich 7 und sich radial von dem Diffusoranschlussbereich 7 erstreckende, voneinander beabstandete Diffusorplatten 8, 9 auf.

Flüssigkeit, die durch die Rohrleitung 2 in die Beladetasse 5 geleitet wird, strömt aus dieser, wie durch die Pfeile A, A' angedeutet, seitlich in das Innere des Flüssigkeitsbehälters 4 aus. Umgekehrt strömt in die Entladetasse 6 entsprechend der mit den Pfeilen B, B' angedeuteten Bewegungsrichtungen Flüssigkeit aus dem Inneren des Flüssigkeitsbehälters 4 in die Entladetasse 6 und wird durch die Rohrleitung 3 aus dem Flüssigkeitsbehälter 4 herausgeleitet.

Die in dem thermischen Energiespeicher 1 verwendeten Be- und Entladetassen 5, 6 weisen eine fixe Beladehöhe auf und sind sowohl für kleine als auch für große Speicher geeignet.

Figur 2 zeigt schematisch eine weitere mögliche Variante eines Be- und/oder Entladesystems für einen thermischen Energiespeicher 1'. Auch hier werden Rohrleitungssysteme 2, 3 zum Ein- bzw. Ausleiten von Flüssigkeit aus dem Flüssigkeitsbehälter 4 verwendet, wobei die Rohrleitungen 2, 3 in Be- bzw. Entladetassen 5, 6 münden, welche grundsätzlich wie die Be- bzw. Entladetassen 5, 6 aus Figur 1 aufgebaut sind.

Im Gegensatz zu der in Figur 1 gezeigten Konstruktion führen die Rohrleitungen 2, 3 der in Figur 2 gezeigten Ausführungsvariante nicht in das Innere des Flüssigkeitsbehälters 4 sondern sind mit den Be- und Entladetassen 5, 6 von außen, seitlich des Flüssigkeitsbehälters 4 verbunden.

Figur 3 zeigt schematisch eine weitere Variante eines Beund/oder Entladesystems für einen thermischen Energiespeicher 1".

In der in Figur 3 gezeigten Variante münden die Rohrleitungen 2, 3 zunächst in Flüssigkeits- bzw. Verteilleitungen 10, 11, 12, 13, welche wiederum in mehrere Be- bzw. Entladetassen 5, 5', 6, 6' münden, die in Form radialer Diffusoren ausgebildet sind. In Figur 3 sind lediglich zur Veranschaulichung jeweils zwei Beladetassen 5, 5' und zwei Entladetassen 6, 6' gezeigt. Es können jedoch auch weitaus mehr als zwei Beladetassen und zwei Entladetassen vorgesehen sein. Beispielsweise können gemäß der vorliegenden Erfindung jeweils sechs symmetrisch angeordnete Beladetassen 5 und sechs symmetrisch angeordnete Entladetassen 6 vorgesehen sein. Auch ist es möglich, dass die Rohrleitungen 2, 3 nicht, wie in Figur 3 gezeigt, im Inneren des Flüssigkeitsbehälters 4 verlaufen, sondern, wie in Figur 2 dargestellt, von außen über Verteilleitungen in die jeweiligen Diffusoren münden.

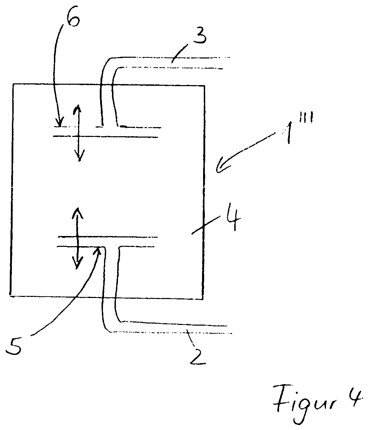

Figur 4 zeigt schematisch eine weitere Variante eines Beund/oder Entladesystems für einen thermischen Energiespeicher 1"'. Der Energiespeicher 1'" ist im Wesentlichen ähnlich wie der Energiespeicher 1' aus Figur 2 aufgebaut, weist jedoch in der Höhe veränderbare Be- und Entladetassen 5, 6 auf. Durch die in der Höhe veränderbaren bzw. schwimmenden Tassen 5, 6 kann das Ein- bzw. Austreten des Fluids entsprechend seiner Temperatur in dem Speicher 1'" vorteilhaft geschichtet werden.

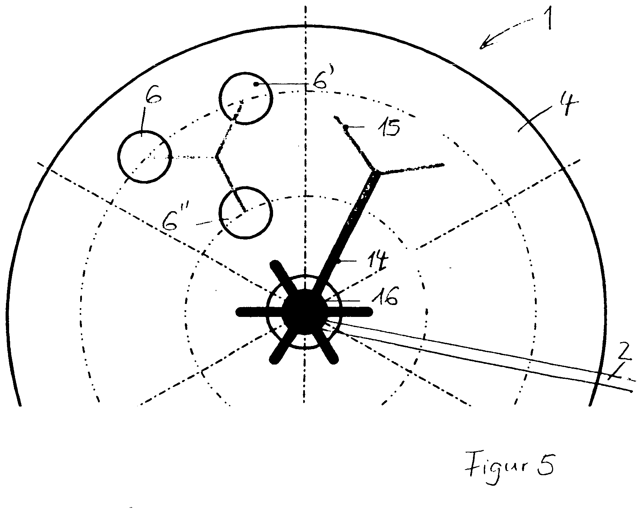

Figur 5 zeigt schematisch eine Anordnung von Flüssigkeits- bzw. Verteilleitungen 14, 15 und Diffusoren 6, 6', 6" in einer Draufsicht auf einen Flüssigkeitsbehälter 4 eines thermischen Energiespeichers 1. Ausgehend von einer Verteilkammer 16, welche in dem gezeigten Beispiel zentral in dem Flüssigkeitsbehälter 4 vorgesehen ist und in welche eine Hauptleitung 2 mündet, zweigen jeweils gleichmäßig nach allen Richtungen sechs Verteilleitungen 14 ab, welche wiederum in Verteilleitungen 15 münden, die mit den radialen Diffusoren 6, 6', 6" verbunden sind. Die in Figur 5 gezeigte Darstellung dient lediglich der Illustration der in einem thermischen Energiespeicher vorhandenen Verteilmechanismen, wobei die Anzahl und Anordnung der Verteilleitungen und Diffusoren von der in Figur 5 gezeigten Anordnung in den verschiedenen Ausführungsvarianten der vorliegenden Erfindung verschieden sein kann.

Wie es aus Figur 5 ersichtlich ist, ist es, um eine gleichmäßige Ein- bzw. Ausschichtung von Flüssigkeit in den bzw. aus dem Flüssigkeitsbehälter 4 durch die Diffusoren 6, 6', 6" zu erreichen, notwendig, den gesamten Volumenstrom der Flüssigkeit auf alle Teilstrecken bzw. Verteilleitungen 14, 15 gleich zu verteilen. In speziellen Ausführungsvarianten der vorliegenden Erfindung sind jedoch auch abweichende Verhältnisse denkbar. Die Einströmung von der Verteilkammer 16 in die Verteilleitungen 14, 15 und von dort in die Diffusoren 6, 6' 6" und umgekehrt wird durch den jeweiligen Aufbau der Strömungskanäle, das heißt der Rohrleitungen, der Verzweigungen und der Diffusoren, stark beeinflusst.

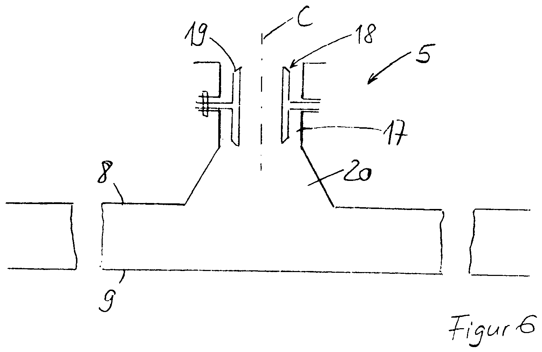

Figur 6 zeigt schematisch eine mögliche Ausführungsform des erfindungsgemäßen Beund/oder Entladesystems für einen thermischen Energiespeicher, wobei in einem zentralen Anschlussbereich des Diffusors 5 ein Einsatz in Form einer bidirektionalen Borda-Mündung 18 vorgesehen ist. Der Diffusor 5 kann sowohl eine Beladetasse als auch eine Entladetasse sein. Die Borda-Mündung 18 ist in einen Flansch 17 des Diffusors 5 eingesetzt. An den Flansch 17 schließt sich eine etwa kegelförmige Misch- und Verteilkammer 20 an, von weicher sich radial voneinander beabstandete Diffusorplatten 8, 9 erstrecken.

Anstelle der Borda-Mündung 18 kann jedoch auch ein anderes Formstück in dem Anschlussbereich des Diffusors 5, mit welchem dieser mit einer Flüssigkeits- oder Verteilleitung verbunden ist, eingesetzt werden. Wichtig ist die Vermeidung von Drehstrahlimpulsen, die durch eine definierte Störung im bidirektionalen Einbau vermieden werden.

Die Borda-Mündung 18 weist an ihrem Auslass und ihrem Einlass jeweils schräge scharfkantige Fasen 19 auf. Hierdurch kann eine besonders gut gerichtete Ein- bzw. Ausströmung von Flüssigkeit aus dem zentralen Anschlussbereich des Diffusors 5 gewährleistet werden.

Der Einsatz bzw. das Einbauteil oder auch mehrere Einbauteile sollten so ausgebildet sein, dass der Strömungswiderstand nur wenig von der Strömungsrichtung abhängt, der Formwiderstandsbeiwert weitgehend unabhängig von der Reynoldszahl ist und der Strahl in allen Betriebssituationen weitgehend stabil zu der mit dem Bezugszeichen C gekennzeichneten Diffusorachse verläuft. Durch den Einsatz, der einen definierten Strömungswiderstand aufweist, der wesentlich höher als der Strömungswiderstand der an den Diffusor 5 angeschlossenen Verteilleitung ist, kommt es zu einer guten bzw. gewünschten Verteilung der Volumenströme in den jeweiligen Teilstrecken des erfindungsgemäßen Be- und/oder Entladesystems.

Durch die Druckänderung, die durch den beispielsweise durch die Borda-Mündung 18 bewirkten verringerten Querschnitt des Flansches 17 erzielt wird, kann am Ein- oder Ausgang des Anschlussbereiches des Diffusors 5 ein Strahl mit einer starken Strömung erzeugt werden, welcher in die Mitte des Diffusors 5 gerichtet werden kann. Auf diese Weise kann die Strömung gleich zwischen verschiedenen Diffusoren verteilt werden, so dass es zu einer definierten Ein- bzw. Ausschichtung von Flüssigkeit durch das erfindungsgemäße Be- und/oder Entladesystem kommt.

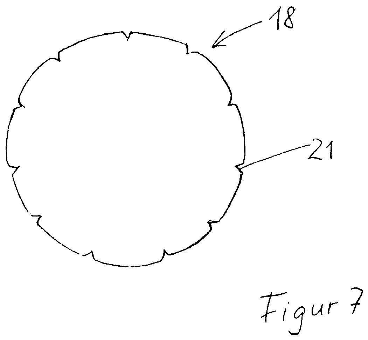

Figur 7 zeigt schematisch einen Querschnitt eines Diffusoreinsatzes 18 mit beispielhaften Störstellen 21. In Figur 7 sind die Störsfellen 21 in Form von Kerben am Rand des Einsatzes 18 ausgebildet. Anstatt der Kerben können auch Minifahnen oder dergleichen als Störstellen verwendet werden. Die Störstellen 21 können sich sowohl am Rand als auch am Innenbereich des Einsatzes 18 befinden oder am Rand des Diffusors 5, 6 ausgebildet sein. Durch die Störstellen 21 wird eine Störwirkung erzielt, die zu einer Strahlstabilisierung führt. Insbesondere kann durch die Störstellen 21 eine Strahlrotation verhindert werden.

## Patentansprüche

1. Be- und/oder Entladesystem für einen thermischen Energiespeicher (1, 1', 1 ", 1"') mit einem Flüssigkeitsbehälter (4) mit wenigstens einem Flüssigkeitszulauf (2) und wenigstens einem Flüssigkeitsablauf (3), wobei der Flüssigkeitszulauf (2) und/oder der Flüssigkeitsablauf (3) wenigstens eine Flüssigkeitsleitung (10, 11, 12, 13) aufweist, die in einen radialen Diffusor (5, 6) mündet, durch welchen Flüssigkeit in den bzw. aus dem Flüssigkeitsbehälter (4) geleitet wird, und wobei der Diffusor (5, 6) einen zentral angeordneten und mit der Flüssigkeitsleitung (10, 11, 12, 13) verbundenen Diffusoranschlussbereich und sich radial von dem Diffusoranschlussbereich erstreckende, voneinander beabstandete Diffusorplatten (8, 9) aufweist, und in dem Diffusoranschlussbereich wenigstens ein Einsatz vorgesehen ist, der einen Strömungswiderstand aufweist, der höher als der Strömungswiderstand der Flüssigkeitsleitung (10, 11, 12, 13) ist **dadurch gekennzeichnet, dass** der Einsatz ein Formstück aufweist und das Formstück eine bidirektionale Borda-Mündung (18) umfasst, wobei die Borda-Mündung (18) ein Einsatz in Form eines zylindrischen Rohrstutzens ist, welcher in beiden Richtungen, das heißt bidirektional, von Flüssigkeit durchströmbar ist.

2. Be- und/oder Entladesystem nach Anspruch 1, **dadurch gekennzeichnet, dass** der Diffusoranschlussbereich einen zylinderförmigen Flansch (17) aufweist, mit dem der Diffusor (5, 6) mit der Flüssigkeitsleitung (10, 11, 12, 13) verbunden ist, wobei der Einsatz in dem Flansch (17) angeordnet ist.

3. Be- und/oder Entladesystem nach Anspruch 1 oder 2, **dadurch gekennzeichnet, dass** die Borda-Mündung (18) am Auslass und/oder Einlass eine schräge, scharfkantige Fase (19) aufweist.

4. Be- und/oder Entladesystem nach einem der vorhergehenden Ansprüche, **dadurch gekennzeichnet, dass** an und/oder in dem Einsatz definierte Störstellen (21) vorgesehen sind.

5. Verfahren zum Be- und/oder Entladen eines thermischen Energiespeichers (1, 1', 1 ", 1") wobei über wenigstens eine Flüssigkeitsleitung (10, 11, 12, 13), die in einen radialen Diffusor (5, 6) mündet, Flüssigkeit in einen bzw. aus einem Flüssigkeitsbehälter des thermischen Energiespeichers (1, 1', 1", 1"') geleitet wird, wobei der Strömung der Flüssigkeit ein Strömungswiderstand durch wenigstens einen Einsatz in einem zentralen Bereich des Diffusors (5, 6) entgegengesetzt wird, wobei der Strömungswiderstand in dem zentralen Bereich des Diffusors (5, 6) höher als der Strömungswiderstand der Flüssigkeitsleitung (10, 11, 12, 13) ist **dadurch gekennzeichnet,**
**dass** der Einsatz ein Formstück aufweist und das Formstück eine bidirektionale Borda-Mündung (18) umfasst, wobei die Borda-Mündung (18) ein Einsatz in Form eines zylindrischen Rohrstutzens ist, welcher in beiden Richtungen, das heißt bidirektional, von Flüssigkeit durchströmt wird.

## Claims

1. Charging and/or discharging system for a thermal energy storage (1, 1', 1 ", 1"') with a liquid container (4) with at least one liquid inlet (2) and at least one liquid discharge (3), wherein the liquid inlet (2) and/or the liquid discharge (3) comprises at least one liquid line (10, 11, 12, 13), which opens into a radial diffuser (5, 6), through which liquid is led into respectively out of the liquid container (4), and wherein the diffuser (5, 6) comprises a centrally arranged diffuser connecting area being connected to the liquid line (10, 11, 12, 13) and spaced apart diffuser plates (8, 9) radially extending from the diffuser connecting area, and at least one insert is provided in the diffuser connecting area, which has a flow resistance, being higher than the flow resistance of the liquid line (10, 11, 12, 13) is **characterized in that** the insert comprises a fitting and the fitting comprises a bidirectional Borda opening (18), wherein the Borda opening (18) is an insert in form of a cylindrical pipe socket, allowing passage of liquid therethrough in both directions, that is bidirectionally.

2. Charging and/or discharging system according to claim 1, **characterized in that** the diffuser connecting area comprises a cylindrical flange (17), with which the diffuser (5, 6) is connected to the liquid line (10, 11, 12, 13), wherein the insert is arranged in the flange (17).

3. Charging and/or discharging system according to claim 1 or 2, **characterized in that** the Borda opening (18) comprises an angled, sharp-edged bevel (19) at the discharge and/or inlet.

4. Charging and/or discharging system according to one of the preceding claims, **characterized in that** defined imperfections (21) are provided on and/or in the insert.

5. Method for charging and/or discharging a thermal energy storage (1, 1', 1", 1"'), wherein liquid is led into respectively out of a liquid container of the thermal energy storage (1, 1', 1", 1'") via at least one liquid line (10, 11, 12, 13), which opens into a radial diffuser (5, 6), wherein a flow resistance is set against the flow of the liquid by at least one insert in a central region of the diffuser (5, 6), wherein the flow resistance in the central region of the diffuser (5, 6) is higher than the flow resistance of the liquid line (10, 11, 12, 13), **characterized in that**
the insert comprises a fitting and the fitting comprises a bidirectional Borda opening (18), wherein the Borda opening (18) is an insert in form of a cylindrical pipe socket, allowing passage of liquid therethrough in both directions, that is bidirectionally.

## Revendications

1. Système de chargement et/ou de déchargement pour un accumulateur d'énergie thermique (1, 1', 1 ", 1"') avec un réservoir de fluide (4) avec au moins une entrée de fluide (2) et au moins une sortie de fluide (3), dans lequel l'entrée de fluide (2) et/ou la sortie de fluide (3) comprend au moins un conduit de fluide (10, 11, 12, 13) qui débouche dans un diffuseur radial (5, 6), dans lequel le fluide est conduit dans ou hors du réservoir de fluide (4), et dans lequel le diffuseur (5, 6) présente une partie de raccordement de diffuseur à emplacement central et relié avec la conduite de fluide (10, 11, 12, 13) et présente des plaques de diffuseur (8, 9) espacées les unes des autres et s'étendant radialement de la partie de raccordement de diffuseur, et au moins un insert est prévu dans la partie de raccordement de diffuseur, qui présente une résistance à l'écoulement, qui est supérieure à la résistance d'écoulement de la conduite de fluide (10, 11, 12, 13), **caractérisé en ce que** l'insert comporte une pièce façonnée et la pièce façonnée comprend une bouche Borda bidirectionnelle (18), dans lequel la bouche Borda (18) est un insert sous la forme d'une tubulure cylindrique, dans lequel le fluide peut circuler dans les deux directions, à savoir bi-directionnellement.

2. Système de chargement et/ou de déchargement selon la revendication 1, **caractérisé en ce que** la partie de raccordement du diffuseur comporte une bride cylindrique (17) avec laquelle le diffuseur (5, 6) est relié au tuyau de fluide (10, 11, 12, 13), dans lequel l'insert est disposé dans la bride (17).

3. Système de chargement et/ou de déchargement selon la revendication 1 ou 2, **caractérisé en ce que** la bouche Borda (18) présente à la sortie et/ou à l'entrée un biseau oblique, à arêtes vives (19).

4. Système de chargement et/ou de déchargement selon l'une quelconque des revendications précédentes, **caractérisé en ce que** des défauts définis (21) sont prévues sur et/ou dans l'insert.

5. Système de chargement et/ou de déchargement pour un accumulateur d'énergie thermique (1, 1', 1", 1"') dans lequel par l'intermédiaire d'au moins un conduit de fluide (10, 11, 12, 13), lequel débouche dans un diffuseur radial (5, 6), un fluide est conduit dans ou hors d'un réservoir de fluide de l'accumulateur d'énergie thermique (1, 1', 1", 1 "'), dans lequel une résistance d'écoulement est opposée à l'écoulement du fluide par au moins un insert dans la zone centrale du diffuseur (5, 6), dans lequel la résistance à l'écoulement dans la partie centrale du diffuseur (5, 6) est supérieure à la résistance à l'écoulement de la conduite de fluide (10, 11, 12, 13), **caractérisé en ce que** l'insert présente une pièce façonnée et la pièce façonnée comprend une bouche Borda bidirectionnelle (18), dans lequel la bouche Borda (18) est un insert sous la forme d'une tubulure cylindrique, qui est parcourue par le fluide dans les deux directions, à savoir bi-directionnellement.
